# EUROPEAN PATENT SPECIFICATION

(11) **EP 0 420 925 B1**
(45) Date of publication and mention of the grant of the patent: **03.03.1993**
(21) Application number: 89907796.0
(22) Date of filing: 22.06.1989
(51) Int. Cl.: G01D 13/04

(54) **AN INSTRUMENT DIAL**
SKALENSCHEIBE FÜR EIN INSTRUMENT
CADRAN D'INSTRUMENT

(30) Priority: 22.06.1988 GB 8814801
(43) Date of publication of application: 10.04.1991
(73) Proprietor: FORD-WERKE AKTIENGESELLSCHAFT, 50725 Köln (DE); FORD FRANCE S. A., 92506 Rueil-Malmaison Cédex (FR); FORD MOTOR COMPANY LIMITED, Brentwood, Essex CM13 3BW (GB)
(72) Inventor: VINCE, Robin John Christopher, Billericay, Essex (GB)
(74) Representative: Messulam, Alec Moses
(86) International application number: GB8900700
(87) International publication number: WO8912800

(56) References cited:
- DE-A- 1 605 947
- DE-A- 3 142 098
- FR-A- 2 132 969
- GB-A- 2 032 363
- GB-A- 2 108 446

## Description

This invention relates to an instrument dial which will form the face of an instrument such as a speedometer in a motor vehicle. The dial will carry a set of indicia against which a pointer or other indicating device will move. The invention relates both to the instrument dial itself, and to a method for the construction of such a dial.

DE-A-3 142 098 discloses an instrument dial which is lit from behind by a spot of light which moves around the dial as the reading to be shown by the instrument changes.

DE-A-1 605 947 and GB-A-2 032 363 both disclose instrument panel constructions for motor vehicles where instruments are secured in appropriate housings in the panel.

According to the invention there is provided a method of constructing an instrument dial wherein the dial indicia are printed on a sheet of thermoformable plastics material, characterised in that, after printing, the sheet is formed to provide it with a planar surface and with detent portions extending out of the plane of the surface, the detent portions being adapted to clip onto the edges of a support structure which thus supports the thermoformable sheet.

The detent portions may be spaced around the perimeter of the surface, or may be in the form of a continuous lip around the whole edge of the surface.

The thermoformable sheet can be printed on either one or both sides prior to forming, and in preferred embodiments both sides are printed each with a number of layers in different colours.

The invention also provides an instrument dial with a face panel on which indicia have been printed and which is divided into translucent and opaque areas, and where the panel has a planar surface and detent portions around the perimeter of the surface and extending out of the plane of the surface, characterised in that the face panel is formed from a thermoformed sheet of thermoformable plastics material, and in that the detent portions allow the panel to be clipped onto a support structure.

The sheet material itself should be translucent before anything is printed on it. A suitable material is transparent polycarbonate.

It is particularly convenient if the detent portions on the formed thermoformable sheet are arranged so that the sheets can form a stable stack with one another ready for assembly.

The invention will now be further described, by way of example, with reference to the accompanying drawings, in which:
Figure 1 is a plan view of a support structure for use in a first embodiment of the invention;
Figure 2 is a plan view of a face panel for mounting on the support structure of Figure 1;
Figure 3 is a detail taken in the direction of the arrow III from Figure 2;
Figure 4 is a cross section on a larger scale, taken on the lines IV-IV from Figure 3;
Figure 5 is an outline sectional view showing a second form of support structure for use in the invention;
Figure 6 is a detail showing the edge condition in a second embodiment of the invention;
Figure 7 is a plan view of a face panel for use with the support structure of Figure 5;
Figure 8 is a section through the face panel of Figure 7 on the line VIII-VIII; and
Figure 9 illustrates how two face panels stack with one another.

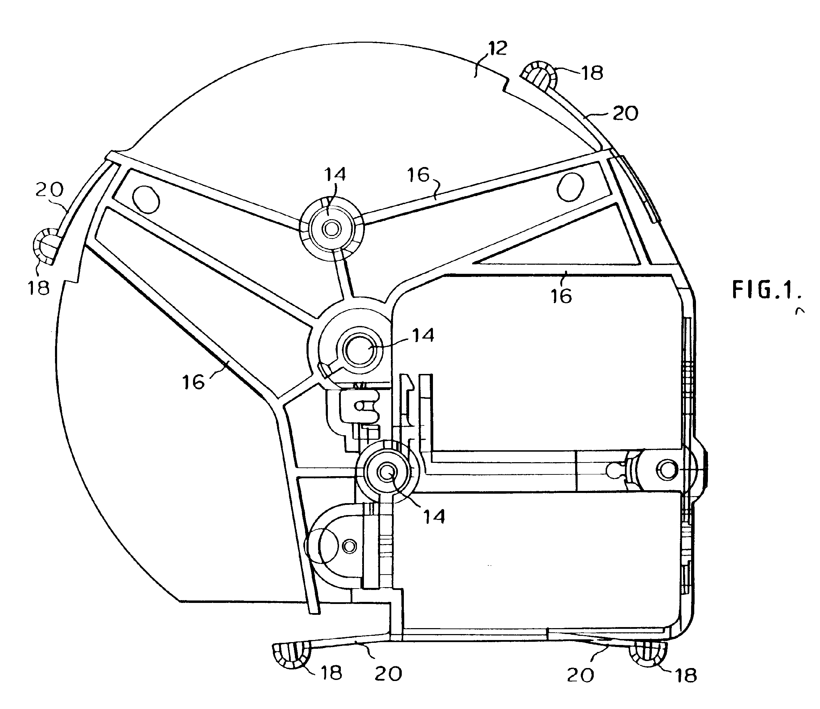

The support structure shown in Figure 1 has a surface 12 in which various mounting holes 14 and strengthening ribs 16 are formed. These features have no connection with the present invention and will not be further described.

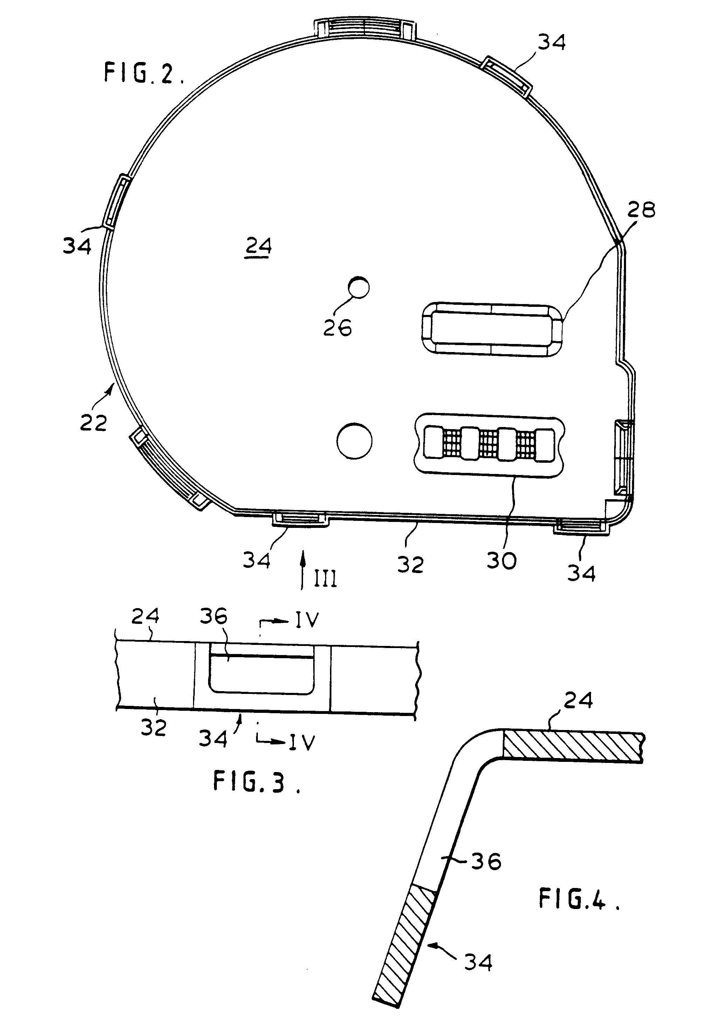

Around the edge of the structure are four radially projecting lugs 18 mounted on resilient stalks 20. These lugs serve to hold a face panel 22 in position on the structure. A face panel 22 is shown in Figure 2 and has a continuous planar surface 24 with a central aperture 26 for the shaft of a speedometer pointer, a series of speed-indicating indicia 27 against which the pointer will move and additional apertures 28, 30 through which the figures of an odometer display can be viewed.

The face panel has a peripheral skirt 32 and edge formations 34 formed in the skirt. The edge formations are positioned so that they register with the lugs 18 on the support structure and are shown in more detail in Figures 3 and 4 where an aperture 36 can be seen in each of the formations.

In use, the face panel will be placed over the support structure. Because of the outward flare of the edge formations 34 and because of the inherent flexibility of the material of the dial, the face panel can simply be pressed onto the structure and the lugs 18 will enter the apertures 36 to hold the face panel in place.

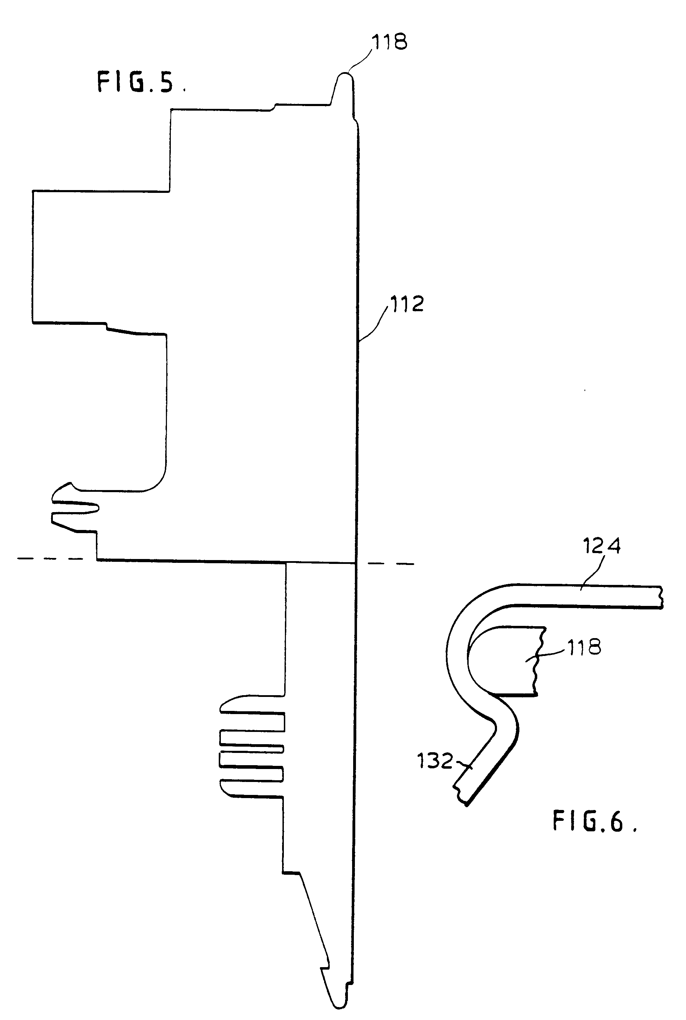

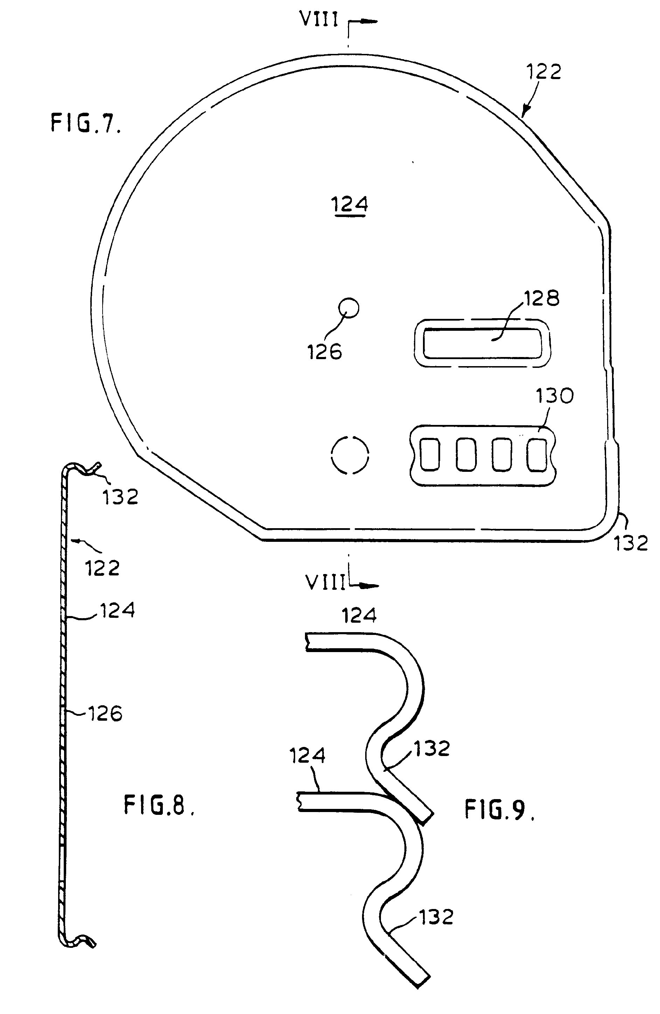

Figures 5 to 9 relate to an alternative embodiment. Here the face panel 122 has a continuous peripheral skirt 132 of constant cross-sectional shape. Continuity of the skirt is not however essential, but in this embodiment the skirt, where it is present, will have a constant cross-sectional shape. This shape is shown clearly in Figures 5 and 6. The edge region 118 of the support structure surface 112 also has a constant cross-section and the way in which the face panel is clipped onto the support is shown in Figure 6. Figure 8 illustrates how two (or more) face panels can be stacked on top of one another to form a stable stack so that the top face panel can be lifted off without disturbing the face panels below it. The face panels do not jam together.

The face panels 22, 122 are made from polycarbonate or other thermoformable sheet. The sheet is initially flat and transparent. It is then printed using a coverlay process to deposit on the sheet various differently treated areas. If the face panel is to be viewed only under reflected light, then there will be no requirement for translucent areas and the front surface only of the sheet need be coated with the required markings in the required colours. If the face panel is to be illuminated with transmitted light from light sources arranged behind the face panel, then some areas will need to be translucent, and these translucent layers, in their various colours will normally be laid down before the final opaque layer covering the parts of the face panel where no light is to be transmitted.

After the printing of the surface of the face panel, the sheet of printed material is formed to produce the edge skirt 32, 132. The material of the face panel is chosen so that thermoforming can take place at a relatively low temperature, and it is important that the printed part of the sheet should suffer no distortion and no other damage from the forming process.

## Claims

1. A method of constructing an instrument dial wherein the dial indicia are printed on a sheet of thermoformable plastics material, characterised in that, after printing, the sheet is formed to provide it with a planar surface (24) and with detent portions (34) extending out of the plane of the surface, the detent portions being adapted to clip onto the edges of a support structure (12) which thus supports the thermoformable sheet.

2. A method as claimed in Claim 1, characterised in that the detent portions (34) are spaced around the perimeter of the planar surface (24).

3. A method as claimed in Claim 1, characterised in that the detent portions are in the form of a continuous lip (132) around the whole edge of the planar surface (124).

4. A method as claimed in any preceding claim, characterised in that the sheet (22, 122) is transparent before printing.

5. A method as claimed in any preceding claim, characterised in that the thermoformable sheet (22, 122) is printed on both sides prior to forming.

6. A method as claimed in Claim 4, characterised in that both sides are printed each with a number of layers in different colours.

7. An instrument dial with a face panel (22) on which indicia have been printed and which is divided into translucent and opaque areas, and where the panel has a planar surface and detent portions (34) around the perimeter of the surface and extending out of the plane of the surface, characterised in that the face panel (22) is formed from a thermoformed sheet of thermoformable plastics material, and in that the detent portions allow the panel to be clipped onto a support structure (12).

8. An instrument dial as claimed in Claim 7, characterised in that the detent portions (34, 132) on the formed thermoformable sheet are arranged so that the sheets can form a stable stack with one another so that the sheets can be lifted one at a time from the top of the stack.

## Patentansprüche

1. Verfahren zur Schaffung einer Instrumentenskala, auf welcher die Skalenzeichen auf ein Blatt aus warformbarem Kunststoff gedruckt werden,
dadurch gekennzeichnet, daß das Blatt nach dem Bedrucken derart verformt wird, daß es mit einer ebenen Oberfläche (24) und mit aus der Ebene dieser Oberfläche herausragenden Rastabschnitten (34) versehen wird, wobei die Rastabschnitte geeignet sind, an den Rändern einer Trägerstruktur (12) einzurasten, die somit das warmtormbare Blatt trägt.

2. Verfahren nach Anspruch 1, dadurch gekennzeichnet, daß die Rastabschnitte (34) um den Umfang der ebenen Oberfläche (24) herum beabstandet angeordnet sind.

3. Verfahren nach Anspruch 1, dadurch gekennzeichnet, daß die Rastabschnitte in Form einer durchgehend um den gesamten Rand der ebenen Flache (124) herumführenden Lippe (132) ausgebildet sind.

4. Verfahren nach einem beliebigen der vorhergehenden Ansprüche, dadurch gekennzeichnet, daß das Blatt (22, 122) vor dem Bedrucken transparent ist.

5. Verfahren nach einem beliebigen der vorhergehenden Ansprüche, dadurch gekennzeichnet, daß das warmformbare Blatt (22, 122) vor der Verformung beidseitig bedruckt wird.

6. Verfahren nach Anspruch 4, dadurch gekennzeichnet, daß beide Seiten mit mehreren Schichten unterschiedlicher Farbe bedruckt werden.

7. Instrumentenskala mit einer mit Zeichen bedruckten und in durchscheinende und in lichtundurchlässige Bereiche unterteilten Frontplatte (22), und worin die Platte eine ebene Oberfläche und um den Umfang der Oberfläche reichende und aus der Ebene der Oberfläche herausragende Rastabschnitte (34) aufweist,
dadurch gekennzeichnet, daß die Frontplatte (22) aus einem warmverformten Blatt aus warmformbarem Kunststoff geformt ist, und daß die Rastabschnitte das Befestigen der Platte durch Einrasten an einer Trägerstruktur (12) erlauben.

8. Instrumentenskala nach Anspruch 7, dadurch gekennzeichnet, daß die Rastabschnitte (34, 132) an dem warmformbaren Blatt so angeordnet sind, daß die Blätter einen stabilen Stapel miteinander bilden, so daß die Blätter eines nach dem anderen von der Spitze des Stapels abgehoben werden können.

## Revendications

1. Procédé de fabrication d'un cadran d'instrument, dans lequel les graduations du cadran sont imprimées sur une feuille d'un matériau synthétique thermoformable, caractérisé en ce que, après impression, la feuille est formée de façon à la doter d'une surface plane (24) et de parties de positionnement (34), faisant saillie en dehors du plan de la surface, les parties de positionnement étant adaptées pour venir s'encliqueter sur les bords d'une structure de support (12) servant ainsi de support à la feuille thermoformable.

2. Procédé selon la revendication 1, caractérisé en ce que les parties de positionnement (34) sont espacées autour du périmètre de la surface plane (24).

3. Procédé selon la revendication 1, caractérisé en ce que les parties de positionnement présentent la forme d'une lèvre continue (132) située tout autour du bord de la surface plane (124).

4. Procédé selon quelconque l'une des revendications précédentes, caractérisé en ce que la feuille (22,122) est transparente avant impression.

5. Procédé selon quelconque l'une des revendications précédentes, caractérisé en ce que la feuille thermoformable (22,122) est imprimée sur les deux faces avant formage.

6. Procédé selon la revendication 4, caractérisé en ce que les deux faces sont chacune imprimées avec un nombre déterminé de couches de différentes couleurs.

7. Cadran d'instrument avec un panneau avant (22) sur lequel des graduations ont été imprimées et divisé en aires translucides et opaques, et le panneau comportant une surface plane et des parties de positionnement (34) autour du périmètre de la surface et faisant saillie hors du plan de la surface, caractérisé en ce que le panneau avant (22) est formé à partir d'une feuille thermoformée en matière synthétique thermoformable et en ce que les parties de positionnement permettent au panneau d'être encliqueté sur une structure servant de support (12).

8. Cadran d'instrument selon la revendication 7, caractérisé en ce que les parties de positionnement (34,132) situées sur la feuille thermoformable formée sont disposées de telle façon que les feuilles puissent former ensemble une pile stable, de telle façon que les feuilles puissent être soulevées une à la fois par le haut de la pile.
